# EUROPÄISCHE PATENTSCHRIFT

(11) **EP 3 774 463 B1**
(45) Veröffentlichungstag und Bekanntmachung des Hinweises auf die Patenterteilung: **05.01.2022**
(21) Anmeldenummer: 19714364.7
(22) Anmeldetag: 25.03.2019
(51) Int. Cl.: B60T 13/26

(54) **STEUEREINRICHTUNG FÜR EINE PARKBREMSEINRICHTUNG EINES FAHRZEUGS**
CONTROL UNIT FOR A VEHICLE PARKING BRAKE
SYSTÈME DE CONTRÔLE D'UN FREIN DE STATIONNEMENT DE VÉHICULE

(30) Priorität: 05.04.2018 DE 102018108005
(43) Veröffentlichungstag der Anmeldung: 17.02.2021
(73) Patentinhaber: KNORR-BREMSE Systeme für Nutzfahrzeuge GmbH, 80809 München (DE)
(72) Erfinder: FARKAS, Gabor, 6000 Kecskemét (HU); KONCZ, Laszlo, 6000 Kecskemét (HU)
(86) Internationale Anmeldenummer: PCT/EP2019/057413
(87) Internationale Veröffentlichungsnummer: WO 2019/192868

(56) Entgegenhaltungen:
- EP-A2- 2 058 185
- DE-A1- 4 327 759
- DE-A1-102008 003 525
- DE-A1-102010 021 909
- DE-A1-102013 106 260
- GB-A- 2 417 764

## Beschreibung

Die vorliegende Erfindung betrifft eine Steuereinrichtung für eine Parkbremseinrichtung eines Anhängerfahrzeugs eines Nutzfahrzeugs mit wenigstens einem pneumatischen Versorgungsanschluss, mit wenigstens einem Steueranschluss, insbesondere zur Steuerung wenigstens eines Federspeicherbremszylinders, mit wenigstens einem Parkventil, mit wenigstens einer ersten Verbindungsleitung und mit wenigstens einem Steuerventil zur Steuerung des Parkventils.

Durch eine falsche Ankupplungsreihenfolge der Druckluftanschlüsse bei einem Anhängerfahrzeug eines Nutzfahrzeug kann sich das Anhängerfahrzeug ungebremst in Bewegung setzten und schwere Schäden herbeiführen. Daher sollte zur Erhöhung der Betriebssicherheit derartiger Anhängerfahrzeuge eine Steuereinrichtung vorgesehen werden, welche das Anhängerfahrzeug auch bei falscher Ankupplung sicher abbremst.

So ist aus der DE 43 27 759 A1 eine eine Druckluft-Bremsanlage für Nutzfahrzeuge bekannt, die mit einer einen Vorratsbehälter aufweisenden Druckluftversorgung und mindestens einer mit Federspeicherbremszylindern ausgestatteten Achse versehen ist, bei der ein Feststellbremsventil in einer von dem Vorratsbehälter zu den Federspeicherbremszylindern führenden Leitung vorgesehen ist.

Zudem offenbart die DE 10 2007 002 020 A1 eine Anhängefahrzeugbrems- und Luftfederungsanlage mit einem mit Vorratsdruck aus dem Vorratsdruckbehälter der Luftfederungsanlage versorgten Hebe-/Senkenventil zum Ändern des Niveaus des Anhängefahrzeugs durch Ändern der Luftmenge in Tragbälgen des Anhängefahrzeugs, mit einem Anhängebremsventil bzw. Parklösesicherheitsventil zur automatischen Einbremsung des Anhängefahrzeugs bei Abriss der Vorratsleitung.

Außerdem zeigt die DE 10 2007 038 472 A1 eine Ventilanordnung zur Steuerung einer wenigstens einen Federspeicherbremszylinder sowie wenigstens einen Betriebsbremszylinder beinhaltenden Bremsanlage eines Anhängerfahrzeugs einer Zugfahrzeug-Anhängerkombination .

Ferner offenbart die DE 10 2008 003 525 A1 eine pneumatische Feststellbremseinrichtung eines wenigstens zweiachsigen, eine gelenkte Vorderachse aufweisenden Anhängerfahrzeugs einer Zugfahrzeug-Anhängerkombination mit einer ersten Ventileinrichtung zur Steuerung einer passiven Bremse an einer Hinterachse des Anhängerfahrzeugs und mit einer zweiten Ventileinrichtung zur Steuerung einer aktiven Bremse an einer Vorderachse des Anhängerfahrzeugs.

Aus der DE 10 2008 060 912 A1 ist weiter eine pneumatische Bremsanlage mit einem im Bereich eines Anhängers angeordneten manuell betätigbaren Parkventil gezeigt, welches a) eine erste Betriebsstellung besitzt, in der eine Federspeicherbremse des Anhängers wirksam ist, sowie b) eine zweite Betriebsstellung besitzt, in der die Federspeicherbremse gelöst ist, dadurch gekennzeichnet, dass c) eine Erfassungseinrichtung für den Betriebszustand der Federspeicherbremse des Anhängers oder des Parkventils vorgesehen ist, d) der Anhänger eine Übertragungseinrichtung besitzt, über welche der durch die Erfassungseinrichtung erfasste Betriebszustand der Federspeicherbremse zu einem Zugfahrzeug übertragbar ist.

Die DE 10 2015 007 383 A1 offenbart weiter eine Ventilanordnung zur Belüftung von Federspeicher-Bremszylindern in einem Anhängefahrzeug mit pneumatischer Bremsanlage, mit einem ersten Anschluss für eine mit einem Vorratsbehälter des Anhängefahrzeugs verbundene Leitung, mit einem zweiten Anschluss für eine zu den Federspeicher-Bremszylindern führende Leitung, und mit einem ersten pneumatischen Steuereingang, wobei in Abhängigkeit vom Druck am ersten Steuereingang der erste Anschluss mit dem zweiten Anschluss verbindbar ist. Erfindungsgemäß ist vorgesehen, dass der erste Steuereingang an eine mit einem Steueranschluss des Anhängefahrzeugs verbundene Leitung oder an eine mit dem Vorratsbehälter verbundene Leitung angeschlossen ist.

Die EP 1 789 296 A1 zeigt weiter ein Bremssystem für einen Anhänger umfassend ein mit Fluidruck betriebenes Betriebsbremssystem, eine Parkbremse mit einem Federantrieb, der in der Lage ist, an der Parkbremse eine Bremskraft herzustellen, und eine elektrische Verbindung zur Erregung eines Magnetventils, wobei der Fluiddruck dem Antrieb durch ein Parkbremsventil zugeführt wird, so dass die Parkbremse bei einem ersten Zustand des Parkbremsventils in der Aus-Position gehalten und die Beseitigung des Fluiddrucks zur Betätigung der Parkbremse führt.

Weitere derartige Steuereinrichtungen für Parkbremseinrichtungen eines Fahrzeugs sind in der EP 2 058 185 A2, der DE 10 2015 007 384 A1, der EP 2 058 186 A2, der EP 2 058 188 A1, der EP 2 058 193 A2, der EP 2 426 021 A1, der EP 2 757 006 A1, der EP 2 757 010 A1, der EP 2 757 011 A1, der EP 3 150 450 A1, der GB 2546254 A, der US 6,669,307 B1 und der WO 2012/175927A1 offenbart.

Aufgrund der aufwändigen pneumatischen Schaltungsanordnungen sowie der teilweise eingeschränkten pneumatischen Steuerungsmöglichkeiten des Parkventils besteht bei Steuerungseinrichtungen im Stand der Technik eine erhöhte Wahrscheinlichkeit einer Fehlfunktion.

Es ist die Aufgabe der vorliegenden Erfindung, eine Steuereinrichtung für eine Parkbremseinrichtung eines Anhängerfahrzeugs der eingangs genannten Art in vorteilhafter Weise weiterzubilden, insbesondere dahingehend, dass die Steuereinrichtung einfacher aufgebaut ist und deren Betriebssicherheit verbessert wird.

Diese Aufgabe wird erfindungsgemäß gelöst durch eine Steuereinrichtung mit den Merkmalen des Anspruchs 1. Danach ist vorgesehen, dass eine Steuereinrichtung für eine Parkbremseinrichtung eines Anhängerfahrzeugs eines Nutzfahrzeugs mit wenigstens einem pneumatischen Versorgungsanschluss, mit wenigstens einem Steueranschluss, insbesondere zur Steuerung wenigstens eines Federspeicherbremszylinders, mit wenigstens einem direkt manuell betätigbaren Parkventil, mit wenigstens einer ersten Verbindungsleitung und mit wenigstens einem Steuerventil zur Steuerung des Parkventils versehen ist, wobei das Parkventil in der ersten Verbindungsleitung angeordnet ist und wobei durch das Parkventil der Versorgungsanschluss und der Steueranschluss über die erste Verbindungsleitung verbindbar sind, wobei von der ersten Verbindungsleitung wenigstens eine Steuerleitung abgezweigt ist, die mit wenigstens einem ersten pneumatischen Steuereingang des Steuerventils verbunden ist, wobei das Steuerventil wenigstens einen zweiten pneumatischen Steuereingang aufweist, und wobei das Steuerventil im Falle einer unerwarteten Betriebsdruckverringerung in der ersten Verbindungsleitung und/oder in der Steuerleitung durch seinen zweiten Steuereingang derart steuerbar ist, dass wenigstens ein Schaltzustand des Parkventils durch das Steuerventil unabhängig von wenigstens einem Betriebszustand des Versorgungsanschlusses pneumatisch ansteuerbar ist, wodurch insbesondere der Steueranschluss durch das Parkventil entlüftet ist.

Die Erfindung basiert auf dem Grundgedanken, dass zur Erhöhung der Betriebssicherheit eines Anhängerfahrzeugs eines Nutzfahrzeugs ein direkt manuell per Hand betätigbares Parkventil durch ein separates Steuerventil pneumatisch angesteuert wird, das zwei pneumatische Steuereingänge aufweist. Dazu ist der erste Steuereingang mit der ersten Verbindungsleitung verbunden, die wiederum über den Versorgungsanschluss der Steuereinrichtung mit einer Fluiddruckquelle in Form eines Kupplungskopfes des Nutzfahrzeugs verbindbar ist. Kommt es nun infolge einer falschen Kupplungsreihenfolge zu einer unerwünschten Bewegung des Anhängerfahrzeugs, hat dies z.B. einen Abriss der Fluidleitung des falsch angekoppelten Kupplungskopfes zur Folge, wodurch die erste Verbindungsleitung und infolge dessen auch der erste Steuereingang entlüftet werden. In diesem Fall wird das Steuerventil durch seinen zweiten Steuereingang umgeschaltet, so dass es nun in der Lage ist das Parkventil pneumatisch umzuschalten bzw. anzusteuern. Eine derartige Umschaltung des Parkventils in seinen Parkzustand hat sodann eine sichere und insbesondere beschleunigte Entlüftung des Steueranschlusses und infolgedessen auch des Federspeicherbremszylinders zur Folge. Hierdurch ist eine sichere und schnelle Abbremsung des Anhängerfahrzeugs auch in einem nicht bestimmungsgemäßen Betriebszustand des Anhängerfahrzeugs gewährleistet. Das Parkventil hat demnach insbesondere die Aufgabe den Federspeicherbremszylinder des Anhängerfahrzeugs zu betätigen und zu lösen. Der zweite Steuereinfang bildet demzufolge eine redundante Rückfallebene für das Steuerventil für den Fall aus, dass der Betriebsdruck an dem ersten Steuereingang infolge des Betriebsdruckabfalls in der ersten Verbindungsleitung bzw. der Steuerleitung abfällt. Eine derartige redundante Rückfallebene verbessert somit weiter die Betriebssicherheit des Anhängerfahrzeugs.

Weiter ist vorstellbar, dass das Steuerventil durch seinen ersten Steuereingang gesteuert ist, wenn jeweils wenigstens ein bestimmungsgemäßer Betriebsdruck an dem ersten und an dem zweiten Steuereingang anliegt, so dass das Parkventil nicht durch das Steuerventil steuerbar ist. Dieser Steuerungsfall liegt insbesondere bei einer richtig durchgeführten Kupplungsreihenfolge im Normalbetrieb des Anhängerfahrzeugs vor. Folglich muss das Steuerungsventil keinerlei Steuerungsaufgaben für das Parkventil übernehmen und kann demzufolge im Wesentlichen in einem mittels des ersten Steuereingangs gesteuerten Zustand betrieben werden. Die Steuerung durch den ersten Steuereingang ermöglicht somit einen schonenden Betrieb des Steuerventils, da das Steuerventil nur in einem nicht bedruckten Zustand des Versorgungsanschlusses des Anhängerfahrzeugs geschaltet wird.

Zudem ist denkbar, dass die Steuereinrichtung wenigstens einem zweiten pneumatischen Versorgungsanschluss aufweist, der mit dem zweiten Steuereingang des Steuerventils über wenigstens eine zweite Verbindungsleitung verbunden ist. Der zweite Steuereingang des Steuerventils ist im Übrigen ebenfalls als pneumatisch gesteuerter Steuereingang ausgebildet. Der zweite Steuereingang ist demnach über den zweiten Versorgungsanschluss der Steuereinrichtung mit einer weiteren Fluiddruckquelle verbunden. Die weitere Fluiddruckquelle ist dabei in Form eines Fluiddruckbehälters bzw. Fluiddruckreservoirs ausgebildet und wenigstens Bestandteil eines Anhängerfahrzeugs eines Nutzfahrzeugs. Im Übrigen kann der zweite Steuereingang besonders einfach in das Steuerventil und in die Parkbremseinrichtung integriert werden. Dies kann damit begründet werden, weil der zweite Steuereingang lediglich an die ohnehin in einem Anhängerfahrzeug vorhandene Infrastruktur (wie Druckbehälter und entsprechende Leitungen usw.) ankoppelbar ist.

Außerdem ist möglich, dass die Steuereinrichtung als pneumatische Steuereinrichtung ausgebildet ist. Bei Anhängerfahrzeugen im Nutzfahrzeugbereich werden mehrheitlich pneumatisch bzw. mit Druckluft gesteuerte Betriebs- und Parkbremseinrichtungen eingesetzt. Deshalb ist eine Integration einer pneumatischen Steuereinrichtung in eine Parkbremseinrichtung besonders strukturell und funktional einfach umsetzbar und daher vorteilhaft. Ferner ist möglich, dass die Steuereinrichtung als wenigstens eine zusammenhängende pneumatische Baueinheit in Form eines pneumatischen Steuermoduls ausgebildet ist. Im Übrigen kann vorgesehen sein, dass die Steuereinrichtung als hydraulische Steuereinrichtung ausgebildet ist

Des Weiteren kann vorgesehen sein, dass von der zweiten Verbindungsleitung wenigstens eine dritte Verbindungsleitung abgezweigt ist, die mit wenigstens einem Ventilanschluss des Steuerventils verbunden ist. Die dritte Verbindungsleitung ermöglicht die Druckluftversorgung des Steuerventils über den Ventilanschluss. Somit ist diese dritte Verbindungsleitung besonders sicherheitsrelevant, wenn das Steuerventil bei einem Druckabfall an dem ersten Steuereingang umschaltet und sodann das Parkventil umschaltet. Diese Umschaltung erfolgt sodann pneumatisch durch die Druckluftversorgung des Steuerventils über diese dritte Verbindungsleitung.

Ebenfalls ist vorstellbar, dass das Steuerventil als pneumatisch steuerbares 3/2-WegeVentil ausgebildet ist und wenigstens einen Belüftungs-Schaltzustand und wenigstens einen Entlüftungs-Schaltzustand aufweist. Das Steuerventil ist dabei insbesondere als doppelt pneumatisch steuerbares 3/2-Wege-Ventil ausgebildet. Die Ausgestaltung in Form eines 3/2-Wegeventils bildet insbesondere den Vorteil, das Steuerventil strukturell möglichst einfach sowohl mit der dritten Verbindungsleitung (über den Ventilanschluss) und mit dem Parkventil über eine Parkventil-Steuerleitung zu verbinden sowie ferner einen Entlüftungsanschluss für die Parkventil-Steuerleitung vorzusehen. Ein 3/2-WegeVentil erfüllt demnach die strukturell einfachsten Voraussetzungen zur Steuerung und Entlüftung des Parkventils über die Parkventil-Steuerleitung sowie zur Versorgung dieser Steuerungsleitung mit Druckluft.

Darüber hinaus ist denkbar, dass das Parkventil als direkt manuell per Hand betätigbares 3/2-Wege-Ventil ausgebildet ist und wenigstens einen Belüftungs-Schaltzustand und wenigstens einen Entlüftungs-Schaltzustand aufweist. Die Ausgestaltung in Form eines 3/2-Wegeventils bildet ebenfalls den Vorteil, das Parkventil strukturell möglichst einfach in die erste Verbindungsleitung zu integrieren, was zwei Betriebsanschlüsse erfordert sowie ferner einen Entlüftungsanschluss für den Steueranschluss der Steuereinrichtung vorzusehen. Ein 3/2-Wege-Ventil erfüllt demnach die strukturell einfachsten Voraussetzungen zur Integration in die erste Verbindungsleitung sowie zur Be- und Entlüftung des Federspeicherbremszylinders über die erste Verbindungsleitung und über dessen Entlüftungsanschluss. Das Betätigungselement des Parkventils kann dabei als kombinierter Zug- und Druckknopf ausgebildet sein. Andere in diesem Zusammenhang bekannte Betätigungselemente, wie Wipp-, Kipp- und/oder Drehschalter usw. können ebenfalls Verwendung finden. Weiterhin ist möglich, dass in dem Entlüftungs-Schaltzustand des Parkventils der Steueranschluss der Steuereinrichtung entlüftet ist und wobei in dem Belüftungs-Schaltzustand des Parkventils der Steueranschluss der Steuereinrichtung belüftet ist. Demnach kann vor allem im Fahrzeugstillstand sehr einfach manuell mittels des Parkventils der Federspeicherbremszylinder des Anhängerfahrzeugs betätigt und gelöst werden. Das manuelle Steuern des Federspeicherbremszylinders bietet insbesondere für Nutzer, wie z.B. Speditionen mit einem großen Anhängerfahrzeugbestand, des Anhängerfahrzeugs weitere Funktionen wie beispielsweise das Rangieren eines Anhängerfahrzeugs ohne angekuppeltes Nutzfahrzeug. Dadurch kann das Anhängerfahrzeug noch variabler und für die Bedürfnisse des Nutzers angepasster verwendet werden.

Zusätzlich kann vorgesehen sein, dass in dem Belüftungs-Schaltzustand des Steuerventils wenigstens ein Steuereingang des Parkventils belüftet ist und wobei in einem Entlüftungs-Schaltzustand des Steuerventils der Steuereingang des Parkventils entlüftet ist. Diese Art der Steuerung sorgt insbesondere im Belüftungs-Schaltzustand des Steuerventils für eine Verbesserung der Betriebssicherheit des Anhängerfahrzeugs. Denn der Belüftungs-Schaltzustand des Steuerventils tritt aufgrund der pneumatischen Verschaltung nur in dem Fall auf, in dem der Versorgungsanschluss nicht mit einer Druckluftquelle verbunden ist.

Ferner ist vorstellbar, dass sich das Steuerventil in seinem Belüftungs-Schaltzustand befindet, wenn der Versorgungsanschluss der Steuereinrichtung nicht mit einer pneumatischen Druckquelle verbunden ist, so dass durch das Steuerventil das Parkventil in seinen Entlüftungs-Schaltzustand überführbar ist. Der Belüftungsschaltzustand liegt insbesondere dann vor, wenn der Versorgungsanschluss der Steuereinrichtung nicht mit einer Druckluftquelle in Form eines Druckluftkupplungskopfes des Nutzfahrzeugs verbunden ist. Eine derartige fehlende Verbindung kann in einem nicht bestimmungsgemäßen Zustand des Anhängerfahrzeugs infolge einer falschen Kupplungsreihenfolge vorliegen. Jedoch kein eine derartige fehlende Verbindung auch gewollt sein, um z.B. das Anhängerfahrzeug mit einem Manövrierfahrzeug zu manövrieren. In jedem Fall wird jedoch das Parkventil durch das Steuerventil zunächst in seinen Entlüftungs-Schaltzustand geschaltet, um in jedem Fall sicher zu gehen, dass der Federspeicherbremszylinder des Anhängerfahrzeugs zunächst entlüftet ist, was sich auf die Betriebssicherheit des Anhängerfahrzeugs besonders vorteilhaft auswirkt.

Auch denkbar ist, dass sich das Steuerventil in seinem Entlüftungs-Schaltzustand befindet, wenn der Versorgungsanschluss der Steuereinrichtung mit der pneumatischen Druckquelle verbunden ist, so dass das Parkventil manuell in seinen Belüftungs- oder Entlüftungs-Schaltzustand überführbar ist. Dieser Fall stellt sich bei der regulären Verwendung des Anhängerfahrzeugs in Kombination mit einem Nutzfahrzeug ein, so dass das Steuerventil einerseits die Möglichkeit der Ansteuerung des Parkventils in einem bestimmungsgemäßen Zustand des Anhängerfahrzeugs bietet (z.B. das Parken des Anhängerfahrzeugs). Demzufolge können mittels des Steuerventils mehrere Betriebszustände des Anhängerfahrzeugs sowie die entsprechenden Schaltstellungen des Parkventils besonders einfach und effizient gesteuert werden.

Überdies ist möglich, dass zwischen dem Parkventil und dem Versorgungsanschluss wenigstens ein Shunt-Ventil in der ersten Verbindungsleitung angeordnet ist, wobei das Shunt-Ventil zusätzlich mit dem zweiten Versorgungsanschluss der Steuereinrichtung verbunden ist. Durch das Shunt-Ventil werden zusätzliche Schaltungszustände und Schaltungszustandskombinationen für die Steuereinrichtung und für das Anhängerfahrzeug vorgesehen. Dadurch kann der Kundennutzen und die Variabilität im Einsatz des Anhängerfahrzeugs weiter verbessert werden. Die Verbindung des Shunt-Ventils mit dem zweiten Versorgungsanschluss sorgt des Weiteren für eine zusätzliche und redundante Druckluftversorgung der ersten Verbindungsleitung, des Parkventils und des Steuerventils, wodurch sich die Betriebssicherheit des Anhängerfahrzeugs weiter erhöhen lässt.

Weiter kann vorgesehen sein, dass das Parkventil durch das Shunt-Ventil in einem ersten Belüftungs-Schaltzustand des Shunt-Ventils mit dem Versorgungsanschluss verbunden ist und wobei das Parkventil durch das Shunt-Ventil in einem zweiten Belüftungs-Schaltzustand des Shunt-Ventils mit dem zweiten Versorgungsanschluss verbunden ist. Diese Verbindung des Shunt-Ventils mit dem Parkventil ermöglicht insbesondere eine vom Versorgungsanschluss unabhängige Versorgung des Parkventils mit Druckluft ausgehend von dem zweiten Versorgungsanschluss. Eine derartige Beschaltung bietet insbesondere den Vorteil, dass das Anhängerfahrzeug durch manuelle Schaltung des Parkventils trotzdem bewegt werden kann, auch wenn die Steuereinrichtung nicht mit einer Druckluftquelle über den Versorgungsanschluss verbunden ist. Das Shunt-Ventil kann somit insbesondere vorteilhaft bei Rangier- und Manövrierfahrten des Anhängerfahrzeugs ohne Bedruckung des Versorgungsanschlusses eingesetzt werden. Der Versorgungsanschluss der Steuereinrichtung ist insbesondere als Hauptversorgungsanschluss ausgebildet.

Zudem vorstellbar ist, dass das Steuerventil durch das Shunt-Ventil in dem zweitem Belüftungs-Schaltzustand des Shunt-Ventils mit dem zweiten Versorgungsanschluss verbunden ist und so in den Entlüftungs-Schaltzustand geschaltet ist. Somit kann neben der Belüftung des Federspeicherbremszylinders auch der erste Steuereingang des Steuerventils durch den zweiten Versorgungsanschluss belüftet werden. Diese Verbindung des Shunt-Ventils mit dem Steuerventil ermöglicht insbesondere die Entlüftung des Steuereingangs des Parkventils, so dass das Parkventil überhaupt erst manuell betätigbar ist, auch wenn der Versorgungsanschluss entlüftet ist. Demzufolge ermöglicht erst eine derartige Beschaltung des Steuerventils die vorteilhafte Möglichkeit, dass das Anhängerfahrzeug durch manuelle Schaltung des Parkventils trotzdem bewegt werden kann, auch wenn die Steuereinrichtung an dem Versorgungsanschluss entlüftet ist.

Weitere Einzelheiten und Vorteile der Erfindung sollen nun anhand der in den Zeichnungen dargestellten Ausführungsbeispiele näher erläutert werden.

### Es zeigen:

- Fig. 1a: eine schematische Darstellung eines ersten Ausführungsbeispiels einer pneumatischen Schaltungsanordnung einer erfindungsgemäßen Steuereinrichtung;
- Fig. 1b: eine schematische Teil-Schnittdarstellung des Steuerventils der erfindungsgemäßen Steuereinrichtung gemäß Fig. 1a;
- Fig. 2a: eine schematische Darstellung eines zweiten Ausführungsbeispiels der pneumatischen Schaltungsanordnung der erfindungsgemäßen Steuereinrichtung gemäß Fig. 1a;
- Fig. 2b: eine schematische Teil-Schnittdarstellung des Steuerventils der erfindungsgemäßen Steuereinrichtung gemäß Fig. 2a;
- Fig. 3a: eine schematische Darstellung eines dritten Ausführungsbeispiels der pneumatischen Schaltungsanordnung der erfindungsgemäßen Steuereinrichtung gemäß Fig. 1a; und
- Fig. 3b: eine schematische Teil-Schnittdarstellung des Steuerventils der erfindungsgemäßen Steuereinrichtung gemäß Fig. 3a.

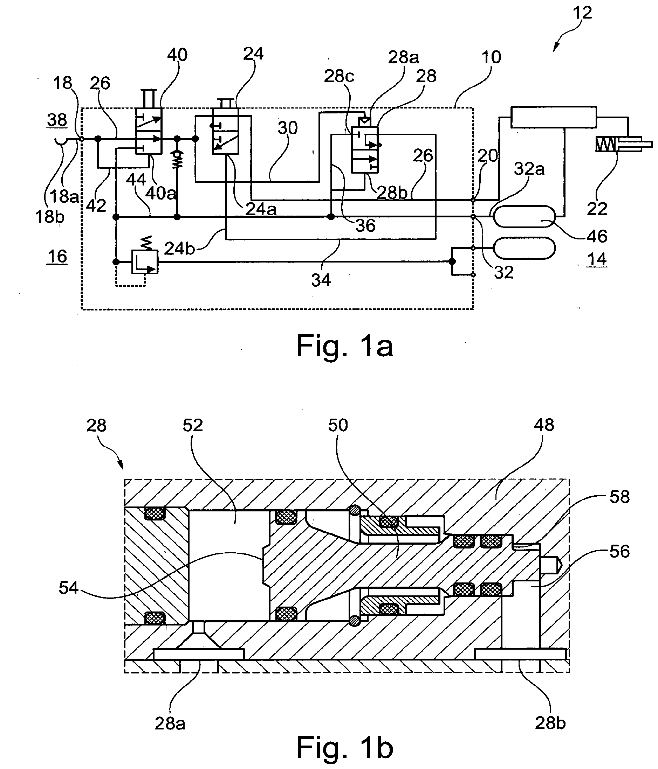

Fig. 1a zeigt eine schematische Darstellung eines ersten Ausführungsbeispiels einer pneumatischen Schaltungsanordnung einer erfindungsgemäßen Steuereinrichtung 10.

Gemäß Fig. 1a befindet die Steuereinrichtung 10 in einem angekuppelten bzw. bedruckten Zustand, so dass sich das Anhängerfahrzeug 14 in einem fahrbereiten Zustand befindet.

Die Steuereinrichtung 10 ist als eine Steuereinrichtung 10 für eine Parkbremseinrichtung 12 eines Anhängerfahrzeugs 14 eines Nutzfahrzeugs 16 ausgebildet.

Die Steuereinrichtung 10 ist als pneumatische Steuereinrichtung 10 ausgebildet.

Im Übrigen kann die Steuereinrichtung 10 auch alternativ als hydraulische Steuereinrichtung 10 ausgebildet sein.

Die Steuereinrichtung 10 weist einen pneumatischen Versorgungsanschluss 18 auf.

An den Versorgungsanschluss 18 ist gemäß Fig.1 eine Versorgungsleitung 18a gekoppelt, an deren freiem Ende ein Druckluft-Kupplungskopf 18b angeordnet ist.

Dieser Versorgungsanschluss 18 ist als Hauptversorgungsanschluss der Steuereinrichtung 10 ausgebildet.

Die Steuereinrichtung 10 weist weiter einen Steueranschluss 20 zur Steuerung eines Federspeicherbremszylinders 22 auf.

Beispielshaft ist in Fig. 1a ein Federspeicherbremszylinder 22 dargestellt, wobei das Anhängerfahrzeug selbstverständlich auch mehr als einen Federspeicherbremszylinder 22 aufweisen kann.

Die Steuereinrichtung 10 weist ein direkt manuell betätigbares Parkventil 24, eine erste Verbindungsleitung 26 und ein Steuerventil 28 zur Steuerung des Parkventils 24 auf.

Das Parkventil 24 ist als manuell direkt manuell per Hand betätigbares 3/2-Wege-Ventil 24 ausgebildet.

Das Betätigungselement des Parkventils 24 kann dabei als kombinierter Zug- und Druckknopf ausgebildet sein.

Ferner kann in diesem Zusammenhang vorgesehen sein, dass weitere aus dem Stand der Technik bekannte Betätigungselemente, wie Wipp-, Kipp- Drehschalter und/oder Dreh-Druckschalter usw. ebenfalls Verwendung finden.

Das Parkventil 24 weist einen Belüftungs-Schaltzustand und einen Entlüftungs-Schaltzustand auf.

Das Parkventil 24 ist in der ersten Verbindungsleitung 26 angeordnet.

Zudem sind der Versorgungsanschluss 18 und der Steueranschluss 20 durch das Parkventil 24 über die erste Verbindungsleitung 26 verbindbar.

Das Steuerventil 28 weist gemäß Fig. 1a einen ersten pneumatischen Steuereingang 28a und einen zweiten pneumatischen Steuereingang 28b auf.

Das Steuerventil 28 ist als pneumatisch steuerbares 3/2-Wege-Ventil 28 ausgebildet.

Das Steuerventil 28 weist einen Belüftungs-Schaltzustand und einen Entlüftungs-Schaltzustand auf.

Von der ersten Verbindungsleitung 26 ist außerdem eine Steuerleitung 30 abgezweigt, die mit dem ersten Steuereingang 28a des Steuerventils 28 verbunden ist.

Die Steuerleitung 30 ist stromaufwärts des Parkventils 24 von der ersten Verbindungsleitung 26 abgezweigt.

Das Parkventil 24 weist außerdem einen Steuereingang 24a auf.

Der Steuereingang 24a ist über eine Parkventil-Steuerleitung 24b mit dem Steuerventil 28 verbunden.

Die Steuereinrichtung 10 weist einen zweiten pneumatischen Versorgungsanschluss 32 auf.

Dieser zweite Versorgungsanschluss 32 ist mit dem zweiten Steuereingang 28b des Steuerventils 28 über eine zweite Verbindungsleitung 34 verbunden.

Von der zweiten Verbindungsleitung 34 ist weiter eine dritte Verbindungsleitung 36 abgezweigt.

Die dritte Verbindungsleitung 36 ist mit einem Ventilanschluss 28c des Steuerventils 28 verbunden.

Der Versorgungsanschluss 18 ist gemäß Fig.1a über die Versorgungsleitung 18a sowie über den Druckluft-Kupplungskopf 18b mit einer pneumatischen Druckquelle 38 bzw. Druckluftquelle 38 druckverbunden.

Die pneumatische Druckluftquelle 38 ist als weiterer Druckluft-Kupplungskopf (nicht in Fig. 1a gezeigt) z.B. eines Anhänger-Steuerventils des Nutzfahrzeugs 16 ausgebildet, welches mit dem Anhängerfahrzeug 14 im betriebsbereiten Zustand gekoppelt ist.

In der ersten Verbindungsleitung 26 ist weiter ein Shunt-Ventil 40 zwischen dem Parkventil 24 und dem Versorgungsanschluss 18 angeordnet.

Das Shunt-Ventil 40 ist als manuell steuerbares bzw. betätigbares 3/2-Wege-Ventil 40 ausgebildet.

Das Shunt-Ventil 40 ist zusätzlich mit dem zweiten Versorgungsanschluss 32 der Steuereinrichtung 10 verbunden.

Das Shunt-Ventil 40 ist weiter über eine vierte Verbindungsleitung 44 mit dem zweiten Versorgungsanschluss 32 verbunden, wobei die vierte Verbindungsleitung 44 von der zweiten Verbindungsleitung 34 abgezweigt ist.

Das Shunt-Ventil 40 weist einen ersten Belüftungs-Schaltzustand und einen zweiten Belüftungs-Schaltzustand auf.

Das Parkventil 24 ist durch das Shunt-Ventil 40 in dem ersten Belüftungs-Schaltzustand des Shunt-Ventils 40 mit dem Versorgungsanschluss 18 verbunden.

Das Shunt-Ventil 40 weist eine Steuerleitung 42 auf, welche stromaufwärts des Shunt-Ventils 40 von der ersten Verbindungsleitung 26 abgezweigt ist und in einen Steuereingang 40a des Shunt-Ventils 40 mündet.

In der ersten Verbindungsleitung 26 ist das Shunt-Ventil 40 stromaufwärts von dem Parkventil 24 angeordnet.

Das Shunt-Ventil 40 wiederum ist gemäß Fig. 1a stromabwärts des Versorgungsanschlusses 18 angeordnet.

An den zweiten Versorgungsanschluss 32 ist weiter eine zweite Versorgungsleitung 32a gekoppelt, die den zweiten Versorgungsanschluss 32 mit einem Druckluftbehälter 46 des Anhängerfahrzeugs verbindet.

Sämtliche vorstehend beschriebenen Leitungen der Steuerungseinrichtung 10 können selbstverständlich auch als Bohrung, Kanal, Nut oder als deren Kombination ausgebildet sein.

Andere Strömungsleitungsverbindungsöffnungen sind in diesem Zusammenhang alleine oder in Kombination ebenfalls denkbar.

Gemäß Fig. 1a weist die Steuereinrichtung 10 weiter einen ersten und einen zweiten Anschluss für eine Luftfederungsanlage des Anhängerfahrzeugs 14 auf.

Der erste Anschluss mit einem weiteren Druckluftbehälter für die Druckluftversorgung der Luftfederungsanlage verbunden, wobei der zweite Anschluss mit einem oder mehreren Luftfederbälgen verbunden ist.

Ferner sind der erste und der zweite Anschluss über eine weitere Verbindungsleitung und über ein Luftfederungs-Steuerventil mit der vierten Verbindungsleitung 44 verbunden.

Die Funktion der Steuereinrichtung 10 gemäß Fig. 1a lässt sich nun wie folgt beschreiben:
Der Funktion der Steuereinrichtung 10 wird ein angekoppelter bzw. bedruckter Zustand des Druckluft-Kupplungskopfes 18a z.B. mit einem Anhängersteuerventil des Nutzfahrzeugs 16 zugrunde gelegt.

Der in der Steuerleitung 42 des Shunt-Ventils 40 anstehende Druck der Druckluft schaltet das Shunt-Ventil 40 in seinen ersten Belüftungs-Schaltzustand.

Das Parkventil 24 ist durch das Shunt-Ventil 40 in dem ersten Belüftungs-Schaltzustand des Shunt-Ventils 40 folglich mit dem Versorgungsanschluss 18 druckverbunden.

Dazu ist der Steuereingang 24a des Parkventils 24 über eine Parkventil-Steuerleitung 24b mit dem Steuerventil 28 zur Ansteuerung des Parkventils 24 durch das Steuerventil verbunden.

Über die Steuerleitung 30 des Steuerventils kann somit der erste Steuereingang 28a des Steuerventils 28 mit Betriebsdruck beaufschlagt werden.

Ferner wird über die zweite Verbindungsleitung 34 der zweite Steuereingang 28b des Steuerventils 28 mit Betriebsdruck beaufschlagt.

Das Steuerventil 28 befindet sich folglich in seinem Entlüftungs-Schaltzustand, da der Versorgungsanschluss 18 der Steuereinrichtung 10 mit der pneumatischen Druckquelle 38 in Form des Druckluft-Kupplungskopfes des Nutzfahrzeugs 16 verbunden ist.

Das Steuerventil 28 ist folglich durch seinen ersten Steuereingang 28a gesteuert, weil jeweils ein bestimmungsgemäßer Betriebsdruck an dem ersten und an dem zweiten Steuereingang 28a, 28b anliegt.

Hierdurch ist das Parkventil 24 wiederum nicht durch das Steuerventil 28 steuerbar.

Vielmehr wird der Steuereingang 24a des Parkventils über die Parkventil-Steuerleitung 24b und durch das Steuerventil 28 entlüftet.

Hierdurch ist das Parkventil 24 bestimmungsgemäß in seinem Belüftungs-Schaltzustand geschaltet, weil gemäß Fig. 1a die Schaltungsanordnung der Steuereinrichtung 10 gemäß einem betriebsbereiten bzw. fahrbereiten Zustand des Nutzfahrzeugs 16 und des Anhängerfahrzeugs 14 geschaltet sein sollte.

In dem Belüftungs-Schaltzustand des Parkventils 24 ist folglich der Steueranschluss 20 der Steuereinrichtung 10 belüftet.

Der Belüftungs-Schaltzustand des Parkventils 24 ist somit einem fahrbereiten Zustand des Anhängerfahrzeugs 14 bzw. einem gelösten Zustand des Federspeicherbremszylinders 22 zugeordnet.

Demzufolge ist der Entlüftungs-Schaltzustand des Parkventils 24 einem Park-Zustand des Anhängerfahrzeugs 14 bzw. einem betätigten Zustand des Federspeicherbremszylinders 22 zugeordnet.

Der Belüftungs-Schaltzustand des Parkventils 24 ist zudem an dem eingedrückten Betätigungselement des Parkventils 24 erkennbar.

Demzufolge ist der mit dem Steueranschluss 20 über eine entsprechende Verbindungsleitung verbundene Federspeicherbremszylinder 22 ebenfalls belüftet, wodurch dieser sich in gelöstem Zustand befindet.

Fig. 1b zeigt eine schematische Teil-Schnittdarstellung des Steuerventils 28 der erfindungsgemäßen Steuereinrichtung 10 gemäß Fig. 1a.

Das Steuerventil 28 weist ein Gehäuse 48 mit einem axial beweglich darin geführten Steuerkolben 50 auf.

Der erste Steuereingang 28a des Steuerventils 28 mündet in eine erste Druckkammer 52, die durch eine erste pneumatische Wirkfläche 54 an einem ersten Ende des Steuerkolbens 50 sowie durch das Gehäuse 48 ausgebildet ist.

Ferner mündet der zweite Steuereingang 28b des Steuerventils 28 in eine zweite Druckkammer 56, die durch eine zweite pneumatische Wirkfläche 58 an einem zweiten Ende des Steuerkolbens 50 sowie durch das Gehäuse 48 ausgebildet ist.

Die erste pneumatische Wirkfläche 54 des Steuerkolbens 50 ist größer als dessen zweite pneumatische Wirkfläche 58.

Demzufolge ist ein erster pneumatisch wirksamer Durchmesser der ersten pneumatischen Wirkfläche 54 größer als ein zweiter pneumatisch wirksamer Durchmesser der zweiten pneumatischen Wirkfläche 58.

Gemäß Fig. 1b befindet sich der Steuerkolben 50 in einer ersten Schaltstellung, wodurch der Entlüftungs-Schaltzustand des Steuerventils 28 hervorgerufen wird.

Die Steuerung des Steuerventils 28 durch seinen ersten Steuereingang 28a erfolgt bei ähnlichen Eingangsdrücken deshalb vorrangig, weil die erste pneumatische Wirkfläche 54 des Steuerkolbens 50 größer als dessen zweite pneumatische Wirkfläche 58 ist.

Hierdurch resultiert folglich die erste Schaltstellung des Steuerkolbens 50.

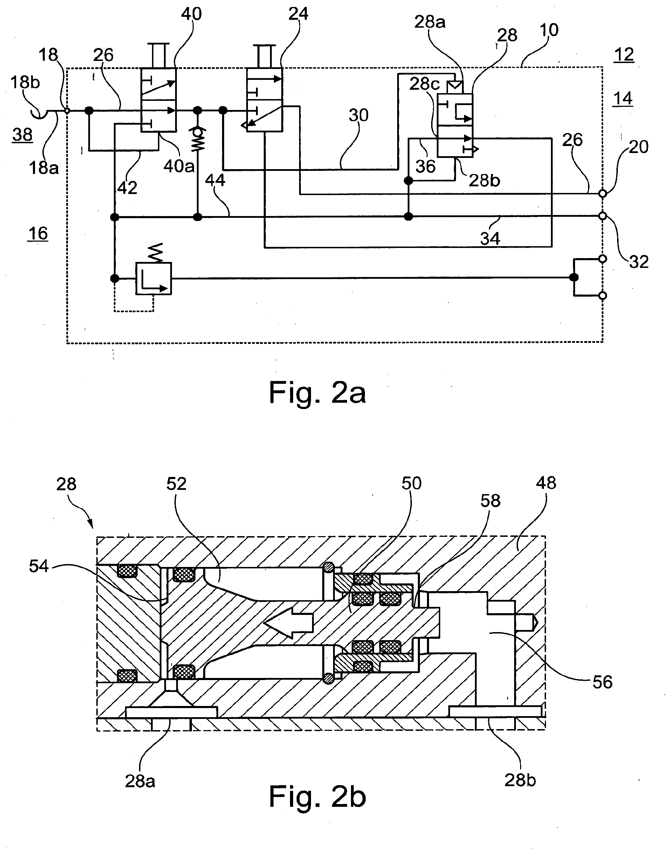

Fig. 2a zeigt eine schematische Darstellung eines zweiten Ausführungsbeispiels der pneumatischen Schaltungsanordnung der erfindungsgemäßen Steuereinrichtung 10 gemäß Fig. 1a.

Der abgekoppelte Zustand des Versorgungsanschlusses 18 gemäß Fig. 2a tritt insbesondere für den Fall auf, in welchem die zwingend vorgeschriebene Kupplungsreihenfolge des Druckluft-Kupplungskopfes 18b nicht eingehalten wurde.

Diese Reihenfolge schreibt vor, dass immer zunächst der Druckluft-Kupplungskopf für die Betriebsbremse (nicht in Fig. 2a gezeigt) mit dem Nutzfahrzeug 16 verbunden werden muss, bevor der in Fig. 2a gezeigte Druckluft-Kupplungskopf 18b entsprechend verbunden wird.

Die nicht eingehaltene Kupplungsreihenfolge hat in ungünstigen Fällen ein nicht bestimmungsgemäßes Losrollen des Anhängerfahrzeugs 14 zur Folge.

Nach einiger Zeit kommt es unvermeidbar zu einem Abriss beispielsweise der Versorgungsleitung 18a oder des Kupplungskopfes 18b, wodurch der Versorgungsanschluss 18 ungewollt entlüftet wird.

Der Funktion der Steuereinrichtung 10 gemäß Fig. 2a wird folglich ein ungewollt abgekoppelter bzw. nicht druckluft-verbundener Zustand des Versorgungsanschlusses 18 zugrunde gelegt.

Die Schaltzustände des Shunt-Ventils 40 betrifft ein derartiger ungewollter Betriebsdruckverlust an dem Versorgungsanschluss nicht, so dass das Shunt-Ventil 40 auch nach dem ungewollten Betriebsdruckverlust in seinem ersten Belüftungs-Schaltzustand verbleibt.

Den nachfolgenden Erläuterungen wird somit das Shunt-Ventil 40 in seinem ersten Belüftungs-Schaltzustand zugrunde gelegt.

Wie vorstehend beschrieben ist, ist in dem ersten Belüftungs-Schaltzustand des Shunt-Ventils 40 das Parkventil 24 mit dem Versorgungsanschluss 18 verbunden.

Da Der Versorgungsanschluss 18 nunmehr entlüftet ist, ist das Parkventil 24 durch das Shunt-Ventil 40 mit dem Versorgungsanschluss 18 verbunden und ist dementsprechend ebenfalls entlüftet, so dass kein Betriebsdruck mehr an dem Parkventil 24 anliegt.

Das Parkventil 24 ist folglich durch das Shunt-Ventil 40 in dem ersten Belüftungs-Schaltzustand des Shunt-Ventils 40 nicht mehr mit dem Versorgungsanschluss 18 druckverbunden.

Ebenfalls wird dadurch die Verbindungsleitung 26 stromaufwärts des Parkventils 14 entlüftet, was eine zusätzliche Entlüftung der Steuerleitung 30 des Steuerventils 28 zur Folge hat.

Über die Steuerleitung 30 wird somit auch der erste Steuereingang 28a des Steuerventils 28 entlüftet.

Die zweite Verbindungsleitung 34 ist jedoch von dem ungewollten Betriebsdruckverlust nicht betroffen, so dass der zweite Steuereingang 28b des Steuerventils 28 nach wie vor mit Betriebsdruck beaufschlagt wird.

Der Betriebsdruck an dem zweiten Steuereingang 28b übersteigt folglich den Betriebsdruck an dem ersten Steuereingang 28a.

Das Steuerventil 28 wird demzufolge im Falle einer unerwarteten Betriebsdruckverringerung in der ersten Verbindungsleitung 26 und in der Steuerleitung 30 durch seinen zweiten Steuereingang 28b gesteuert.

Das Steuerventil 28 ist somit derart steuerbar, dass ein Schaltzustand des Parkventils 24 durch das Steuerventil 28 unabhängig von einem Betriebszustand des Versorgungsanschlusses 18 pneumatisch ansteuerbar ist, wodurch der Steueranschluss 20 der Steuereinrichtung 10 durch das Parkventil 24 entlüftet ist.

Ein Umschalten des Steuerventils 28 von seinem Entlüftungs-Schaltzustand in seinen Belüftungs-Schaltzustand (in Fig. 2a dargestellt) ist somit die Folge.

Das Steuerventil 28 befindet sich also in seinem Belüftungs-Schaltzustand, da der Versorgungsanschluss 18 der Steuereinrichtung 10 nicht mit einer pneumatischen Druckquelle 38 verbunden ist.

Das Steuerventil 28 kann sich jedoch auch in seinem Belüftungs-Schaltzustand befinden, wenn an dem Versorgungsanschluss 18 - wie vorstehend beschrieben - eine unerwartete Betriebsdruckverringerung auftritt.

Das Steuerventil 28 ist somit gemäß Fig. 2a durch seinen zweiten Steuereingang 28b derart steuerbar, dass ein Schaltzustand des Parkventils 24 durch das Steuerventil 28 steuerbar ist.

In dem Belüftungs-Schaltzustand des Steuerventils 28 wird der Steuereingang 24a des Parkventils 24 folglich belüftet.

Demnach ist mittels des Steuerventils 28 das Parkventil 24 in seinen Entlüftungs-Schaltzustand überführbar.

In dem Entlüftungs-Schaltzustand des Parkventils 24 wird der Steueranschluss 20 der Steuereinrichtung 10 sodann entlüftet.

Ein Betätigen des Federspeicherbremszylinders 22 mittels dessen integrierter mechanischer Feder ist die Folge, so dass das Anhängerfahrzeug 14 nach kurzer Zeit nach dem ungewollten Betriebsdruckverlust zum sicheren Stillstand kommt und keine weitere Gefahr mehr darstellt.

Fig. 2b zeigt eine schematische Teil-Schnittdarstellung des Steuerventils 28 der erfindungsgemäßen Steuereinrichtung 10 gemäß Fig. 2a.

Gemäß Fig. 2b befindet sich der Steuerkolben 50 in seiner zweiten Schaltstellung, wodurch der Belüftungs-Schaltzustand des Steuerventils 28 hervorgerufen wird.

Die Steuerung des Steuerventils 28 durch seinen zweiten Steuereingang 28b erfolgt deshalb, weil die erste Druckkammer 52 entlüftet ist und somit die Druckkraft an der ersten pneumatische Wirkfläche 54 des Steuerkolbens 50 kleiner als an dessen zweiter pneumatischen Wirkfläche 58 ist.

Hierdurch resultiert folglich auch die zweite Schaltstellung des Steuerkolbens 50,

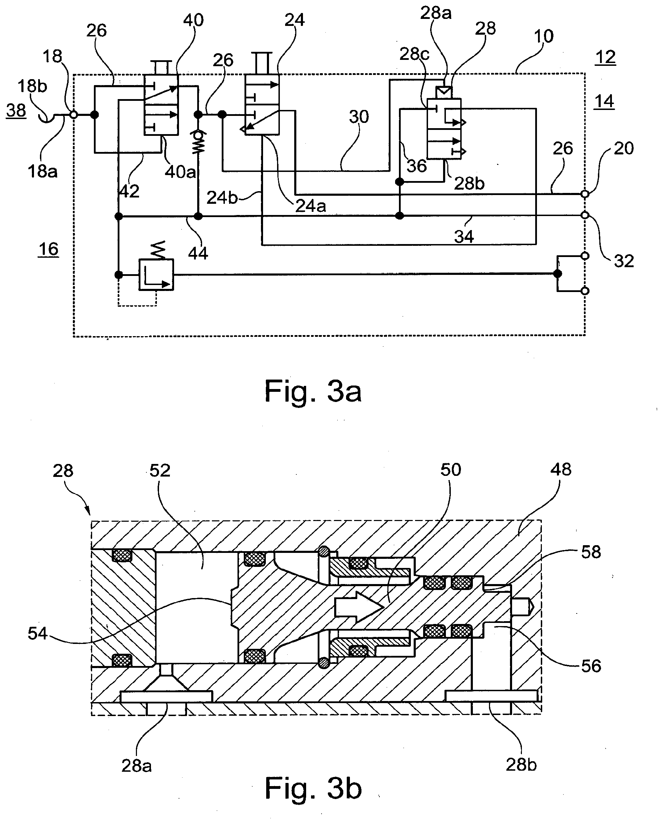

Fig. 3a zeigt eine schematische Darstellung eines dritten Ausführungsbeispiels der pneumatischen Schaltungsanordnung der erfindungsgemäßen Steuereinrichtung 10 gemäß Fig. 1a.

Ein abgekoppelter bzw. entlüfteter Zustand des Versorgungsanschlusses 18 gemäß Fig. 3a kann jedoch grundsätzlich auch gewollt herbeigeführt werden.

Ein Beispiel für dieses gewollte Abkoppeln ist ein Manövrierbetrieb des Anhängerfahrzeugs 14 durch ein Manövrierfahrzeug.

Der Funktion der Steuereinrichtung 10 gemäß Fig. 2a wird folglich ein gewollt abgekoppelter bzw. nicht druckluft-verbundener Zustand des Versorgungsanschlusses 18 zugrunde gelegt.

Der Belüftungs-Schaltzustand des Shunt-Ventils 40 kann sodann frei durch einen Fahrzeugführer gewählt werden.

Der Fahrzeugführer sollte für den Manövrierbetrieb des Anhängerfahrzeugs 14 den zweiten Belüftungs-Schaltzustand des Shunt-Ventils 40 manuell einstellen.

Den nachfolgenden Erläuterungen wird somit das Shunt-Ventil 40 in seinem zweiten Belüftungs-Schaltzustand zugrunde gelegt.

Das Parkventil 24 wird somit durch das Shunt-Ventil 40 in dem zweiten Belüftungs-Schaltzustand des Shunt-Ventils 40 mit dem zweiten Versorgungsanschluss 32 druckverbunden.

Ebenfalls wird dadurch die Verbindungsleitung 26 zwischen dem Parkventil 24 und dem Shunt-Ventil 40 belüftet, was eine zusätzliche Belüftung der Steuerleitung 30 des Steuerventils 28 zur Folge hat.

Über die Steuerleitung 30 wird somit auch der erste Steuereingang 28a des Steuerventils 28 wiederum belüftet.

Ferner ist über die zweite Verbindungsleitung 34 der zweite Steuereingang 28b des Steuerventils 28 mit Betriebsdruck beaufschlagt.

Das Steuerventil 28 wird demzufolge durch seinen ersten Steuereingang 28a gesteuert (vgl. dazu Fig. 1a, 1b), was ein Umschalten des Steuerventils 28 von seinem Belüftungs-Schaltzustand in seinen Entlüftungs-Schaltzustand (in Fig. 3a dargestellt) zur Folge hat.

Durch den Entlüftungs-Schaltzustand des Steuerventils 28 ist wiederum der Steuereingang 24a des Parkventils 24 entlüftet und nicht durch das Steuerventil 28 ansteuerbar.

Somit ist das Parkventil 24 manuell in seinen Belüftungs- oder Entlüftungs-Schaltzustand durch den Fahrzeugführer überführbar.

Je nach Manövrierfunktion kann also der Fahrzeugführer den Steueranschluss 20 und damit auch den Federspeicherbremszylinder 22 be- oder entlüften, d.h. die Parkbremseinrichtung 12 aktivieren oder deaktivieren.

Stellt ein Fahrzeugführer versehentlich den ersten Belüftungsschaltzustand des Shunt-Ventils 40 und den Belüftungs-Schaltzustand des Parkventils 24 ein, liegt die gleiche Schaltungsanordnung der Steuereinrichtung 10 wie in Fig. 2a nach dem ungewollten Abkoppeln des Druckluftanschlusses 18 vor.

Fig. 3b zeigt eine schematische Teil-Schnittdarstellung des Steuerventils 28 der erfindungsgemäßen Steuereinrichtung 10 gemäß Fig. 3a.

Gemäß Fig. 3b befindet sich der Steuerkolben 50 in seiner ersten Schaltstellung, wodurch der Entlüftungs-Schaltzustand des Steuerventils 28 hervorgerufen wird.

Die Steuerung des Steuerventils 28 durch seinen ersten Steuereingang 28a erfolgt bei ähnlichen Eingangsdrücken deshalb vorrangig, weil die erste pneumatische Wirkfläche 54 des Steuerkolbens 50 größer als dessen zweite pneumatische Wirkfläche 58 ist.

Hierdurch resultiert folglich die erste Schaltstellung des Steuerkolbens 50.

### BEZUGSZEICHENLISTE

- 10: Steuereinrichtung
- 12: Parkbremseinrichtung
- 14: Anhängerfahrzeug
- 16: Nutzfahrzeug
- 18: Versorgungsanschluss
- 18a: Versorgungsleitung
- 18b: Druckluft-Kupplungskopf
- 20: Steueranschluss der Steuereinrichtung
- 22: Federspeicherbremszylinder
- 24: Parkventil
- 24a: Steuereingang des Parkventils
- 24b: Parkventil-Steuerleitung
- 26: erste Verbindungsleitung
- 28: Steuerventil
- 28a: erster Steuereingang des Steuerventils
- 28b: zweiter Steuereingang des Steuerventils
- 28c: Ventilanschluss des Steuerventils
- 30: Steuerleitung des Steuerventils
- 32: zweiter Versorgungsanschluss
- 32a: zweite Versorgungsleitung
- 34: zweite Verbindungsleitung
- 36: dritte Verbindungsleitung
- 38: pneumatische Druckquelle
- 40: Shunt-Ventil
- 40a: Steuereingang des Shunt-Ventils
- 42: Steuerleitung des Shunt-Ventils
- 44: vierte Verbindungsleitung
- 46: Druckluftbehälter des Anhängers
- 48: Gehäuse
- 50: Steuerkolben
- 52: erste Druckkammer
- 54: erste pneumatische Wirkfläche
- 56: zweite Druckkammer
- 58: zweite pneumatische Wirkfläche

## Patentansprüche

1. Steuereinrichtung (10) für eine Parkbremseinrichtung (12) eines Anhängerfahrzeugs (14) eines Nutzfahrzeugs (16) mit wenigstens einem pneumatischen Versorgungsanschluss (18), mit wenigstens einem Steueranschluss (20), insbesondere zur Steuerung wenigstens eines Federspeicherbremszylinders (22), mit wenigstens einem direkt manuell betätigbaren Parkventil (24), mit wenigstens einer ersten Verbindungsleitung (26) und mit wenigstens einem Steuerventil (28) zur Steuerung des Parkventils (24), wobei das Parkventil (24) in der ersten Verbindungsleitung (26) angeordnet ist und wobei durch das Parkventil (24) der Versorgungsanschluss (18) und der Steueranschluss (20) über die erste Verbindungsleitung (26) verbindbar sind, wobei von der ersten Verbindungsleitung (26) wenigstens eine Steuerleitung (30) abgezweigt ist, die mit wenigstens einem ersten pneumatischen Steuereingang (28a) des Steuerventils (28) verbunden ist, wobei das Steuerventil (28) wenigstens einen zweiten pneumatischen Steuereingang (28b) aufweist, und wobei das Steuerventil (28) im Falle einer unerwarteten Betriebsdruckverringerung in der ersten Verbindungsleitung (26) und/oder in der Steuerleitung (30) durch seinen zweiten Steuereingang (28b) derart steuerbar ist, dass wenigstens ein Schaltzustand des Parkventils (24) durch das Steuerventil (28) unabhängig von wenigstens einem Betriebszustand des Versorgungsanschlusses (18) pneumatisch ansteuerbar ist, wodurch insbesondere der Steueranschluss (20) durch das Parkventil (24) entlüftet ist.

2. Steuereinrichtung (10) nach Anspruch 1,
**dadurch gekennzeichnet, dass**
das Steuerventil (28) durch seinen ersten Steuereingang (28a) gesteuert ist, wenn jeweils wenigstens ein bestimmungsgemäßer Betriebsdruck an dem ersten und an dem zweiten Steuereingang (28a, 28b) anliegt, so dass das Parkventil (24) nicht durch das Steuerventil (28) steuerbar ist.

3. Steuereinrichtung (10) nach Anspruch 1 oder Anspruch 2,
**dadurch gekennzeichnet, dass**
die Steuereinrichtung (10) wenigstens einem zweiten pneumatischen Versorgungsanschluss (32) aufweist, der mit dem zweiten Steuereingang (28b) des Steuerventils (28) über wenigstens eine zweite Verbindungsleitung (34) verbunden ist.

4. Steuereinrichtung (10) nach einem der Ansprüche 1 bis 3,
**dadurch gekennzeichnet, dass**
die Steuereinrichtung (10) als pneumatische Steuereinrichtung (10) ausgebildet ist.

5. Steuereinrichtung (10) nach Anspruch 3,
**dadurch gekennzeichnet, dass**
von der zweiten Verbindungsleitung (34) wenigstens eine dritte Verbindungsleitung (36) abgezweigt ist, die mit wenigstens einem Ventilanschluss (28c) des Steuerventils (28) verbunden ist.

6. Steuereinrichtung (10) nach einem der vorhergehenden Ansprüche,
**dadurch gekennzeichnet, dass**
das Steuerventil (28) als pneumatisch steuerbares 3/2-Wege-Ventil (28) ausgebildet ist und wenigstens einen Belüftungs-Schaltzustand und wenigstens einen Entlüftungs-Schaltzustand aufweist.

7. Steuereinrichtung (10) nach einem der vorhergehenden Ansprüche,
**dadurch gekennzeichnet, dass**
das Parkventil (24) als direkt manuell per Hand betätigbares 3/2-Wege-Ventil (24) ausgebildet ist und wenigstens einen Belüftungs-Schaltzustand und wenigstens einen Entlüftungs-Schaltzustand aufweist.

8. Steuereinrichtung (10) nach Anspruch 7,
**dadurch gekennzeichnet, dass**
in dem Entlüftungs-Schaltzustand des Parkventils (24) der Steueranschluss (20) der Steuereinrichtung (10) entlüftet ist und wobei in dem Belüftungs-Schaltzustand des Parkventils (24) der Steueranschluss (20) der Steuereinrichtung (10) belüftet ist.

9. Steuereinrichtung (10) nach Anspruch 6,
**dadurch gekennzeichnet, dass**
in dem Belüftungs-Schaltzustand des Steuerventils (28) wenigstens ein Steuereingang (24a) des Parkventils (24) belüftet ist und wobei in einem Entlüftungs-Schaltzustand des Steuerventils (28) der Steuereingang (24a) des Parkventils (24) entlüftet ist.

10. Steuereinrichtung (10) nach einem der Ansprüche 6 bis 9,
**dadurch gekennzeichnet, dass**
sich das Steuerventil (28) in seinem Belüftungs-Schaltzustand befindet, wenn der Versorgungsanschluss (18) der Steuereinrichtung (10) nicht mit einer pneumatischen Druckquelle (38) verbunden ist oder wenn an dem Versorgungsanschluss (18) eine unerwartete Betriebsdruckverringerung auftritt, so dass durch das Steuerventil (28) das Parkventil (24) in seinen Entlüftungs-Schaltzustand überführbar ist.

11. Steuereinrichtung (10) nach einem der Ansprüche 6 bis 10,
**dadurch gekennzeichnet, dass**
sich das Steuerventil (28) in seinem Entlüftungs-Schaltzustand befindet, wenn der Versorgungsanschluss (18) der Steuereinrichtung (10) mit der pneumatischen Druckquelle (38) verbunden ist, so dass das Parkventil (24) manuell in seinen Belüftungs- oder Entlüftungs-Schaltzustand überführbar ist.

12. Steuereinrichtung (10) nach einem der Ansprüche 3 bis 11,
**dadurch gekennzeichnet, dass**
zwischen dem Parkventil (24) und dem Versorgungsanschluss (18) wenigstens ein Shunt-Ventil (40) in der ersten Verbindungsleitung (26) angeordnet ist, wobei das Shunt-Ventil (40) zusätzlich mit dem zweiten Versorgungsanschluss (32) der Steuereinrichtung (10) verbunden ist.

13. Steuereinrichtung (10) nach einem der Ansprüche 3 bis 12,
**dadurch gekennzeichnet, dass**
das Parkventil (24) durch das Shunt-Ventil (40) in einem ersten Belüftungs-Schaltzustand des Shunt-Ventils (40) mit dem Versorgungsanschluss (18) verbunden ist und wobei das Parkventil (24) durch das Shunt-Ventil (40) in einem zweiten Belüftungs-Schaltzustand des Shunt-Ventils (40) mit dem zweiten Versorgungsanschluss (32) verbunden ist.

14. Steuereinrichtung (10) nach einem der Ansprüche 3 bis 13,
**dadurch gekennzeichnet, dass**
das Steuerventil (28) durch das Shunt-Ventil (40) in dem zweitem Belüftungs-Schaltzustand des Shunt-Ventils (40) mit dem zweiten Versorgungsanschluss (32) verbunden ist und so in den Entlüftungs-Schaltzustand geschaltet ist.

## Claims

1. A control device (10) for a parking brake device (12) of a trailer vehicle (14) of a utility vehicle (16) having at least one pneumatic supply connection (18), having at least one control connection (20), in particular for controlling at least one spring-loaded brake cylinder (22), having at least one directly manually actuable parking valve (24), having at least one first connecting line (26) and having at least one control valve (28) for controlling the parking valve (24), wherein the parking valve (24) is arranged in the first connecting line (26), and wherein the supply connection (18) and the control connection (20) can be connected by the parking valve (24) via the first connecting line (26), wherein at least one control line (30) is branched off from the first connecting line (26) and is connected to at least one first pneumatic control inlet (28a) of the control valve (28), wherein the control valve (28) has at least one second pneumatic control inlet (28b), and wherein in the event of an unexpected reduction in operating pressure in the first connecting line (26) and/or in the control line (30) the control valve (28) can be controlled by means of its second control inlet (28b) in such a way that at least one switched state of the parking valve (24) can be activated pneumatically by means of the control valve (28) independently of at least one operating state of the supply connection (18), as a result of which in particular the control connection (20) is vented by means of the parking valve (24).

2. The control device (10) as claimed claim 1,
**characterized in that**
the control valve (28) is controlled by its first control inlet (28a) if in each case at least one satisfactory operating pressure is present at the first and at the second control inlets (28a, 28b) so that the parking valve (24) cannot be controlled by the control valve (28).

3. The control device (10) as claimed in claim 1 or claim 2,
**characterized in that**
the control device (10) has at least one second pneumatic supply connection (32) which is connected to the second control inlet (28b) of the control valve (28) via at least one second connecting line (34).

4. The control device (10) as claimed in one of claims 1 to 3,
**characterized in that**
the control device (10) is embodied as a pneumatic control device (10).

5. The control device (10) as claimed in claim 3,
**characterized in that**
at least one third connecting line (36) is branched off from the second connecting line (34) and is connected to at least one valve connection (28c) of the control valve (28).

6. The control device (10) as claimed in one of the preceding claims,
**characterized in that**
the control valve (28) is embodied as a pneumatically controllable 3/2-way valve (28) and has at least one ventilation switched state and at least one venting switched state.

7. The control device (10) as claimed in one of the preceding claims,
**characterized in that**
the parking valve (24) is embodied as a directly manually actuable 3/2-way valve (24) and has at least one ventilation switched state and at least one venting switched state.

8. The control device (10) as claimed in claim 7,
**characterized in that**
in the venting switched state of the parking valve (24) the control connection (20) of the control device (10) is vented, and wherein in the ventilation switched state of the parking valve (24) the control connection (20) of the control device (10) is ventilated.

9. The control device (10) as claimed in claim 6,
**characterized in that**
in the ventilation switched state of the control valve (28) at least one control inlet (24a) of the parking valve (24) is ventilated, and wherein in a venting switched state of the control valve (28) the control inlet (24a) of the parking valve (24) is vented.

10. The control device (10) as claimed in one of claims 6 to 9,
**characterized in that**
the control valve (28) is in its ventilation switched state if the supply connection (18) of the control device (10) is not connected to a pneumatic pressure source (38) or if an unexpected reduction in operating pressure occurs at the supply connection (18) so that the parking valve (24) can be transferred into its venting switched state by means of the control valve (28).

11. The control device (10) as claimed in one of claims 6 to 10,
**characterized in that**
the control valve (28) is in its venting switched state if the supply connection (18) of the control device (10) is connected to the pneumatic pressure source (38) so that the parking valve (24) can be transferred manually into its ventilation switched state or venting switched state.

12. The control device (10) as claimed in one of claims 3 to 11,
**characterized in that**
at least one shunt valve (40) is arranged in the first connecting line (26), between the parking valve (24) and the supply connection (18), wherein the shunt valve (40) is additionally connected to the second supply connection (32) of the control device (10).

13. The control device (10) as claimed in one of claims 3 to 12,
**characterized in that**
in a first ventilation switched state of the shunt valve (40) the parking valve (24) is connected to the supply connection (18) by means of the shunt valve (40), and wherein in a second ventilation switched state of the shunt valve (40) the parking valve (24) is connected to the second supply connection (32) by means of the shunt valve (40).

14. The control device (10) as claimed in one of claims 3 to 13,
**characterized in that**
in the second ventilation switched state of the shunt valve (40) the control valve (28) is connected to the second supply connection (32) by means of the shunt valve (40) and is thereby switched into the venting switched state.

## Revendications

1. Dispositif (10) de commande d'un dispositif (12) de frein de stationnement d'un véhicule (14) remorque d'un véhicule (16) utilitaire, comprenant au moins un raccord (18) d'alimentation pneumatique, comprenant au moins un raccord (20) de commande, notamment pour commander au moins un cylindre (22) de frein à ressort accumulateur, comprenant au moins une soupape (24) de stationnement pouvant être actionnée directement manuellement, comprenant au moins un premier conduit (26) de liaison et comprenant au moins une soupape (28) de commande pour la commande de la soupape (24) de stationnement, dans lequel la soupape (24) de stationnement est montée dans le premier conduit (26) de liaison et dans lequel, par la soupape (24) de stationnement, le raccord (18) d'alimentation et le raccord (20) de commande peuvent communiquer par le premier conduit (26) de liaison, dans lequel bifurque du premier conduit (26) de liaison au moins un conduit (30) de commande, qui est relié à au moins une première entrée (28a) de commande pneumatique de la soupape (28) de commande, dans lequel la soupape (28) de commande a au moins une deuxième entrée (28b) de commande pneumatique et dans lequel la soupape (28) de commande peut, dans le cas d'une diminution inattendue de la pression de fonctionnement et/ou dans le premier conduit (26) de liaison et/ou dans le conduit (30) de commande être commandée par sa deuxième entrée (28b) de commande, de la manière à ce qu'au moins un état de commutation de la soupape (24) de stationnement puisse être commandée pneumatiquement par la soupape (28) de commande indépendamment du au moins un état de fonctionnement du raccord (18) d'alimentation, grâce à quoi notamment le raccord (20) de commande peut être mis à l'atmosphère par la soupape (24) de stationnement.

2. Dispositif (10) de commande suivant la revendication 1, **caractérisé en ce que**
la soupape (28) de commande est commandée par sa première entrée (28a) de commande, si respectivement au moins une pression de fonctionnement conforme aux prescriptions s'applique à la première et à la deuxième entrée (28a, 28b) de commande, de sorte que la soupape (24) de stationnement ne peut pas être commandée par la soupape (28) de commande.

3. Dispositif (10) de commande suivant la revendication 1 ou la revendication 2,
**caractérisé en ce que**
le dispositif (10) de commande a au moins un deuxième raccord (32) d'alimentation pneumatique, qui est relié à la deuxième entrée (28b) de commande de la soupape (28) de commande par au moins un deuxième conduit (34) de liaison.

4. Dispositif (10) de commande suivant l'une des revendications 1 à 3,
**caractérisé en ce que**
le dispositif (10) de commande est constitué sous la forme d'un dispositif (10) de commande pneumatique.

5. Dispositif (10) de commande suivant la revendication 3, **caractérisé en ce que**
du deuxième conduit (34) de liaison bifurque au moins un troisième conduit (36) de liaison, qui communique avec au moins un raccord (28c) de la soupape (28) de commande.

6. Dispositif (10) de commande suivant l'une des revendications précédentes,
**caractérisé en ce que**
la soupape (28) de commande est constituée en soupape (28) à 3/2 voies pouvant être commandée pneumatiquement et a au moins un état de commutation à alimentation en air et au moins un état de commutation de mise à l'atmosphère.

7. Dispositif (10) de commande suivant l'une des revendications précédentes,
**caractérisé en ce que**
la soupape (24) de stationnement est constituée sous la forme d'une soupape (24) à 3/2 voies pouvant être actionnée directement manuellement à la main et a au moins un état de commutation d'alimentation en air et au moins un état de commutation de mise à l'atmosphère.

8. Dispositif (10) de commande suivant la revendication 7, **caractérisé en ce que**
dans l'état de commutation de mise à l'atmosphère de la soupape (24) de stationnement, le raccord (20) de commande du dispositif (10) de commande est mis à l'atmosphère et dans lequel, dans l'état de commande d'alimentation en air de la soupape (24) de stationnement, le raccord (20) de commande du dispositif (10) de commande est alimenté en air.

9. Dispositif (10) de commande suivant la revendication 6, **caractérisé en ce que**
dans l'état de commutation d'alimentation en air de la soupape (28) de commande, au moins une entrée (24a) de commande de la soupape (24) de stationnement est alimentée en air, dans lequel, dans un état de commutation de mise à l'atmosphère de la soupape (28) de commande, l'entrée (24a) de commande de la soupape (24) de stationnement est mise à l'atmosphère.

10. Dispositif (10) de commande suivant l'une des revendications 6 à 9,
**caractérisé en ce que**
la soupape (28) de commande se trouve dans son état de commutation d'alimentation en air, si le raccord (18) d'alimentation du dispositif (10) de commande ne communique pas avec une source (38) de pression pneumatique ou s'il apparaît au raccord (18) d'alimentation une diminution inattendue de la pression de fonctionnement, de sorte que, par la soupape (28) de commande, la soupape (24) de stationnement peut passer dans son état de commutation de mise à l'atmosphère.

11. Dispositif (10) de commande suivant l'une des revendications 6 à 10,
**caractérisé en ce que**
la soupape (28) de commande se trouve dans son état de commutation de mise à l'atmosphère, si le raccord (18) d'alimentation du dispositif (10) de commande communique avec la source (38) de pression pneumatique, de sorte que la soupape (24) de stationnement peut passer manuellement dans son état de commutation d'alimentation en air ou de mise à l'atmosphère.

12. Dispositif (10) de commande suivant l'une des revendications 3 à 11,
**caractérisé en ce**
**qu'**entre la soupape (24) de stationnement et le raccord (18) d'alimentation, au moins une soupape (40) de dérivation est montée dans le premier conduit (26) de liaison, la soupape (40) de dérivation étant reliée en outre au deuxième raccord (32) d'alimentation du dispositif (10) de commande.

13. Dispositif (10) de commande suivant l'une des revendications 3 à 12,
**caractérisé en ce que**
la soupape (24) de stationnement est reliée par la soupape (40) de dérivation, dans un premier état de commutation d'alimentation en air de la soupape (40) de dérivation, au raccord (18) d'alimentation et dans lequel la soupape (24) de stationnent est reliée par la soupape (40) de dérivation, dans un deuxième état de commutation d'alimentation en air de la soupape (40) de dérivation, au deuxième raccord (32) d'alimentation.

14. Dispositif (10) de commande suivant l'une des revendications 3 à 13,
**caractérisé en ce que**
la soupape (28) de commande est reliée par la soupape (40) de dérivation, dans le deuxième état de commutation d'alimentation en air de la soupape (40) de dérivation, au deuxième raccord (32) d'alimentation et est mise ainsi dans l'état de commutation de mise à l'atmosphère.
